# EUROPÄISCHE PATENTSCHRIFT

(11) **EP 1 944 671 B1**
(45) Veröffentlichungstag und Bekanntmachung des Hinweises auf die Patenterteilung: **06.10.2010**
(21) Anmeldenummer: 07023928.0
(22) Anmeldetag: 11.12.2007
(51) Int. Cl.: G05B 23/02, G06Q 10/00

(54) **Verwaltungssystem für Fahrzeugbehandlungsanlagen**
Administration system for automobile care installations
Système de gestion pour installations de traitement de véhicules

(30) Priorität: 09.01.2007 DE 202007000532 U
(43) Veröffentlichungstag der Anmeldung: 16.07.2008
(73) Patentinhaber: Otto Christ AG, 87734 Benningen (DE)
(72) Erfinder: Christ, Markus, 87700 Memmingen (DE)
(74) Vertreter: Ernicke, Klaus Stefan

(56) Entgegenhaltungen:
- WO-A-01/67190
- US-A1- 2004 049 590
- US-A1- 2004 220 817
- US-A1- 2005 265 584

## Beschreibung

Die Erfindung betrifft ein Verwaltungssystem für Fahrzeugbehandlungsanlagen, insbesondere Waschanlagen, mit den Merkmalen im Oberbegriff des Hauptanspruchs.

Derartige Behandlungsanlagen besitzen mehrere Anlagenkomponenten und eine Steuerung für die Komponenten sowie die Fahrzeugbehandlungsanlage. Die Verwaltungstätigkeit in technischer und/oder wirtschaftlicher Hinsicht, z.B. Einstellen von Steuerparametern, Ablesen von Zustandsinformationen, Erfassung von Vlirtschaftszahlen über die Zahl der Wäschen, Materialverbrauch etc. werden vor Ort vorgenommen.

Die US 2004/220817 A1 offenbart ein Verwaltungssystem für mehrere Autowaschanlagen, die jeweils mehrere Anlagenkomponenten und eine Steuerung aufweisen. Das Verwaltungssystem besitzt eine zentrale Verwaltungseinheit, die der Überwachung von mehreren angeschlossenen Autowaschanlagen und insbesondere der Überwachung der dortigen Waschprozesse und Chemikalienverbräuche sowie des Chemikaliennachschubs dient. Von der zentralen verwaltungseinheit können außerdem Steuerungen in den dezentralisierten Waschanlagen angesprochen werden, um den Chemikalienverbrauch und die Wassertemperatur bedarfsgerecht zu steuern. Wartungsarbeiten werden von der zentralen Verwaltungseinheit jedoch nicht an den dezentralen Waschanlagen durchgeführt. Hierfür wird im Bedarfsfall ein Wartungsdienst beauftragt, der zur betreffenden Waschanlage fährt und dort vor Ort die Wartungsarbeiten vornimmt. Die Verwaltungseinheit ist mit der Steuerung und den Chemikalienversorgungen durch eine Datenfernübertragung mit Internet-Kommunikation und mit graphischen Benutzer-Schnittstellen verbunden, wobei die Steuerung und die Chemikalienversorgungen und die Verwaltungseinheit web-Browser aufweisen. Die verwaltungseinheit ist mit einem Computersystem nebst Betriebssystem, Anwendungsprogrammen und einem Bildschirm ausgestattet, auf dem in einem rechteckigen Bereich die Anzeigenausgabe eines Anwendungsprogramms präsentiert wird.

Die US 2004/049590 A1 befasst sich mit einem Automationssteuermodul unter Einsatz eines simple object access protocols.

Die WO 01/67190 A2 betrifft eine industrielle Produktionsanlage mit einem Web-Steuerungssystem für die Steuerung von Robotern und Schweißeinrichtungen.

In der US 2005/265584 A1 ist ein Bilderfassungssystem für Fahrzeuge und deren Position in einer Autowaschanlage bekannt.

Es ist Aufgabe der vorliegenden Erfindung, eine bessere Verwaltungsmöglichkeit aufzuzeigen.

Die Erfindung löst diese Aufgabe mit den Merkmalen im Hauptanspruch.
Das beanspruchte Verwaltungssystem hat den Vorteil, dass es dezentral arbeiten kann und eine Datenerfassung und Datenverarbeitung außerhalb der Fahrzeugbehandlungsanlage ermöglicht. Auch eine Fernbedienung und eine Fernwartung sind über das Verwaltungssystem möglich. Hierbei kann ein Zugriff auf die Anlagensteuerung und/oder die einzelnen Komponenten und Geräte der Fahrzeugbehandlungsanlage erfolgen. Die hierfür vorgesehene Verwaltungseinheit kann z.B. in der Zentrale eines Anlagenbetreibers angeordnet sein. Sie kann alternativ oder zusätzlich auch an anderer Stelle, z.B. einer Kundendienststelle zur Durchführung von Fernwartungen etc., angeordnet sein.

Besondere Vorteile bietet das Verwaltungssystem für Anlagenbetreiber, die mehrere Fahrzeugbehandlungsanlagen verwalten wollen. Dies kann von einem zentralen Ort aus geschehen, wobei die erfassten Daten direkt ausgewertet und weiter verarbeitet werden können, z.B. für Buchhaltung, Lagerhaltung, Wirtschaftspläne etc.

Durch das beanspruchte Verwaltungssystem kann der Einsatz von Personal vor Ort an der Fahrzeugbehandlungsanlage wesentlich reduziert werden. Die gewünschten Daten sind außerdem wesentlich schneller als bisher verfügbar und liegen in einer direkt weiterverarbeitbaren Form vor. Günstig sind ferner die deutlich verkürzten Reaktionszeiten für Störungsfälle oder andere besondere Betriebssituationen der Anlage. Mittels einer über das Verwaltungssystem durchführbaren Fernwartung lassen sich viele Störungsfälle und sonstigen Probleme one Personaleinsatz vor Ort beheben.

Durch das beanspruchte Verwaltungssystem wird der Betrieb von ein oder mehreren Fahrzeugbehandlungsanlagen einfacher und wirtschaftlicher. Die Betriebsabläufe werden transparenter und lassen sich leichter erfassen. Anlageneingriffe können schneller und zielgerichteter durchgeführt werden.

Zur Durchführung dieser Verwaltungsaufgaben, die außer technischen und/oder wirtschaftlichen Bereichen auch beliebige andere Bereiche betreffen können, sind die Verwaltungseinheit und die Datenfernübertragung in geeigneter Weise ausgebildet. Hierfür können Standardkomponenten, z.B. Personalcomputer, Internetverbindungen und dergleichen eingesetzt werden.

Die Anschlussmöglichkeiten können mannigfaltig variieren. Vorteilhafterweise können bereits vorhandene Computernetzwerke benutzt werden, die z.B. an einer Tankstelle neben der Fahrzeugbehandlungsanlage bereits bestehen und die über einen eigenen Datenübertragungsanschluss, z.B. einen Internetanschluss, verfügen. In einem solchen Fall kann die Fahrzeugbehandlungsanlage und deren Steuerung in besonders einfacher Weise und auf direktem Wege an dieses vorhandene Netzwerk angeschlossen und auch mit dem Internet verbunden werden.

Das Verwaltungssystem arbeitet mit ein oder mehreren geeigneten Programmen. Die Programme stellen Bildschirmmasken zur Verfügung, die die Datenerfassung, Anzeige und Befehlsübertragung erleichtern und vereinfachen. Insbesondere können spezielle Bildschirmmasken für unterschiedliche Zwecke vorhanden sein, z.B. tabellenartige Masken zur Erfassung und Anzeige von wirtschaftsdaten, wie waschzahlen, Betriebsmittelverbrauch, Laufzeiten etc. Andere Masken können für die technische Bedienung, z.B. die Einstellung von Steuerparametern, für die Fernwartung, für die Fernüberwachung etc. Verwendung finden. Solche Bildschirmmasken sind auch an die Erscheinungsform von Steuertableaus vor Ort an der Fahrzeugbehandlungsanlage und insbesondere an deren Steuerung angepasst und bilden diese nach. Das Verwaltungssystem kann die Anlagensteuerung vor Ort simulieren. Hierdurch kann eine einheitliche Handhabung sichergestellt werden, welche die Bedienung vereinfacht und Fehler vermeidet.

Über das Verwaltungssystem können zustandsinformationen übertragen und ggf. ausgetauscht werden. Ferner können zusätzlich Steuerbefehle übermittelt werden.

Mit dem Verwaltungssystem lassen sich außer den reinen Betriebsdaten die Fahrzeugbehandlungsanlage selbst auch Peripheriedaten erfassen und einbeziehen. Hierfür können z.B. eine Überwachungseinrichtung, insbesondere eine Kamera, über die Steuerung oder in anderer geeigneter Weise an das Verwaltungssystem angeschlossen werden, Über ein oder mehrere solcher Kameras ist eine optische Fernüberwachung möglich, mit der einerseits die Sicherheit erhöht werden kann. Andererseits lassen sich externe Beeinflussungen des Anlagenbetriebs erfassen, z.B. widrige Umgebungsbedingungen, Warteschlangen oder dergleichen, auf die mit entsprechenden Steuerbefehlen und Anpassungen der Anlageneinstellungen und des Anlagenbetriebs reagiert werden kann.

Das Verwaltungssystem kommuniziert mit der oder den Anlagen über eine Datenfernübertragung, insbesondere ein geeignetes, ggf. mehrteiliges Datenübertragungsnetzwerk, vorteilhafterweise das Internet. Der Verbindungsaufbau kann einseitig von der Anlage her erfolgen, wobei die Anlage von außen her nicht über das Netzwerk angewählt werden kann. Dies erhöht die Störsicherheit.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine schematische Darstellung eines Verwaltungssystems mit einer Fahrzeugbehandlungsanlage, einer externen Verwaltungseinheit und einer Datenfernübertragung,
- Figur 2:: eine schematische Darstellung eines Verwaltungssystems mit einem Netzwerk in Verbindung mit einer Anlagenkette und
- Figur 3:: eine schematische Darstellung einer Bildschirmmaske.

Die Erfindung betrifft ein Verwaltungssystem (1) für ein oder mehrere Fahrzeugbehandlungsanlagen (2). Die Erfindung betrifft ferner ein Verfahren zum externen Verwalten, Überwachen und Steuern solcher Fahrzeugbehandlungsanlagen (2). Die Fahrzeugbehandlungsanlagen (2) können von beliebiger Art, Größe und Ausgestaltung sein. Im gezeigten Ausführungsbeispiel handelt es sich um ein oder mehrere Autowaschanlagen, insbesondere Portalwaschanlagen oder Autowaschstraßen oder dergleichen. Alternativ können Polieranlagen vorgesehen sein.

Die Fahrzeugbehandlungsanlage (2) dient zum Behandeln, insbesondere zum Waschen von Fahrzeugen (7). Sie ist z.B. als Autowaschstraße ausgebildet und weist mehrere Anlagenkomponenten (3) in Form von aufgereihten Bearbeitungsstationen auf. Die in diesen Bearbeitungsstationen (3) oder an anderer Anlagenstelle einzeln oder mehrfach vorhandenen Bearbeitungsgeräte (4) stellen ebenfalls Anlagenkomponenten dar. Die Anlagenkomponenten (3,4) dienen zur mechanischen und automatischen Fahrzeugbehandlung. Hierfür sind z.B. ein oder mehrere Stationen (3) mit Hochdruckdüsen und/oder Waschbürsten, z.B. Dachbürsten, Seitenbürsten und Radbürsten, vorhanden. Das Fahrzeug (7) wird bei der gezeigten Autowaschstraße durch die einzelnen Bearbeitungsstationen (3) geschleppt. Andere Bearbeitungsstationen (3) können Sprühstationen für den Auftrag von Reinigungsflüssigkeiten, Konservierungsstoffen, Wachs oder dergleichen sein. Ferner sind ein oder mehrere Trockenstationen mit Trockendüsen, Mittern oder dergleichen andere Trockenaggregaten vorhanden. Alternativ kann die Fahrzeugbehandlungsanlage (2) als Portalwaschanlage ausgebildet sein, bei der sich ein oder mehrere Portale mit den Bearbeitungsgeräten (4) gegenüber dem stehenden Fahrzeug bewegen. Umfasst sind ferner Anlagenvarianten wie Taktanlagen oder dergleichen.

Die Fahrzeugbehandlungsanlage (2) hat eine Steuerung (5). Diese kann mehrteilig sein und umfasst z.B. eine übergeordnete Anlagensteuerung, die ggf. mit einzelnen Gerätesteuerungen ergänzt ist. Der Begriff einer Steuerung (5) wird im vorliegenden Zusammenhang allgemein verstanden und erfasst jede Art von Steuer- oder Bedieneinrichtung, an der Betriebsdaten der Fahrzeugbehandlungsanlage (2) erfasst und/oder beeinflusst werden können.

Der Fahrzeugbehandlungsanlage (2) können ein oder mehrere Überwachungseinrichtungen (6) zugeordnet sein. Diese können anlagenintern oder -extern angeordnet sein. Eine Überwachungseinrichtung (6) kann z.B. aus einer Kamera, insbesondere einer digitalen Videokamera, bestehen. Mit dieser können Vorgänge im Inneren der Anlage (2) und/oder in deren äußerem Umfeld erfasst und beobachtet werden. Die Überwachungseinrichtung (6) kann alternativ anders ausgebildet sein, z.B. als Sensorik oder dergleichen. Die einzeln oder mehrfach vorhandene Überwachungseinrichtung (6) kann mit der Steuerung (5) datentechnisch verbunden sein, z.B. über eine Leitung oder eine drahtlose Datenübertragung per Funk, Infrarotlicht oder dergleichen.

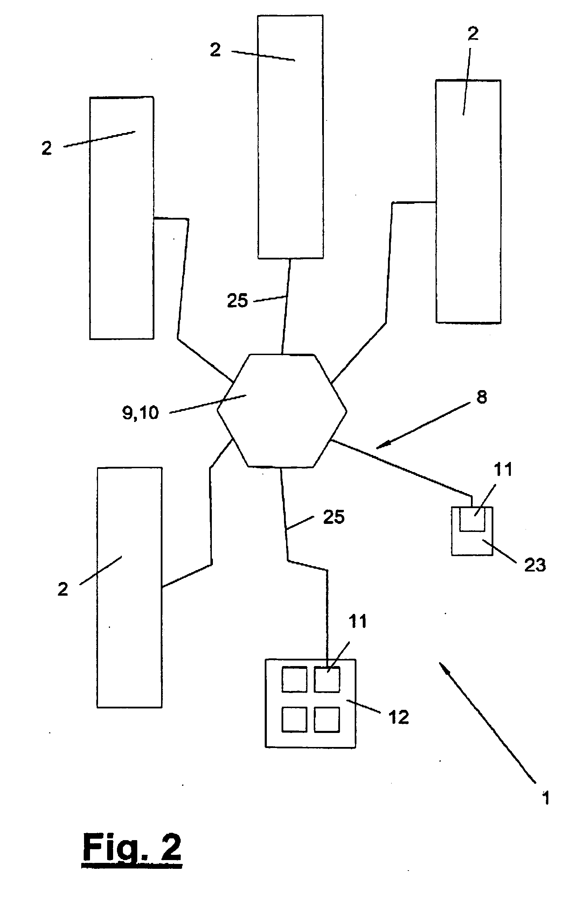

Das Verwaltungssystem (1) weist mindestens eine externe Verwaltungseinheit (11) auf, die mit der Steuerung (5) durch eine Datenfernübertragung (8) verbunden ist. Die Verwaltungseinrichtung (1) kann räumlich getrennt und weit entfernt von der Fahrzeugbehandlungsanlage (2) angeordnet sein. Sie kann sich gemäß Figur 2 insbesondere in der Verwaltungszentrale (12) eines Betreibers einer einzelnen Fahrzeugbehandlungsanlage (2) oder auch einer Anlagenkette angeordnet sein. Alternativ oder zusätzlich sind andere Aufstellungsorte für die Verwaltungseinheit (11) möglich, z.B. in einer Kundendienststelle des Anlagenherstellers, eines Wartungsunternehmens oder dergleichen.

Vom Anlagenbetreiber aus wird über das Verwaltungssystem (1) eine Datenerfassung der Betriebs- und Anlagendaten durchgeführt. Dies können Wirtschaftsdaten, technische Daten oder sonstige Daten sein. Im Verwaltungssystem (1) werden hierfür z.B. Zustandsinformationen von der Behandlungsanlage (2) an die Verwaltungseinheit (1) gemeldet. In Gegenrichtung können Steuerbefehle übertragen werden, mit denen z.B. Einfluss auf die Steuerung (5) und deren Einstellparameter genommen wird. -

Die Betriebs- und Anlagendaten können von beliebiger Art sein. Es kann sich z.B. um Zählerstände von Behandlungszyklen, insbesondere Wäschen, handeln, die ggf. nach Behandlungsprogrammen, insbesondere Waschprogrammen differenziert sind. Die Daten können ferner Zählerstände einzelner Behandlungsprozesse oder Anlagenkomponenten sein. Sie können ferner Füllstandsanzeigen von Betriebsmitteln, Energieverbrauchsanzeigen, Geschwindigkeitsanzeigen oder dgl. sein. Die Verwaltungseinheit (1) kann ein Datenbanksystem aufweisen, von dem alle Informationen gesammelt, gespeichert und verarbeitet, insbesondere protokolliert und berichtsweise ausgegeben werden.

Über das Verwaltungssystem (1) und dessen Datenfernübertragung (8) ist auch eine Fernsteuerung der Fahrzeugbehandlungsanlage (2) in ihrer Gesamtheit oder im Rahmen ein oder mehrerer Anlagenkomponenten (3,4) möglich. Von einer Kundendienststelle (23) aus kann z.B. eine Fernwartung einschließlich Fernüberwachung, Fehlerdiagnose und Fehlerbehebung und dergleichen durchgeführt werden. Die Kommunikationswege für den Austausch von Zustandsinformationen und Bedienbefehlen können bidirektional sein.

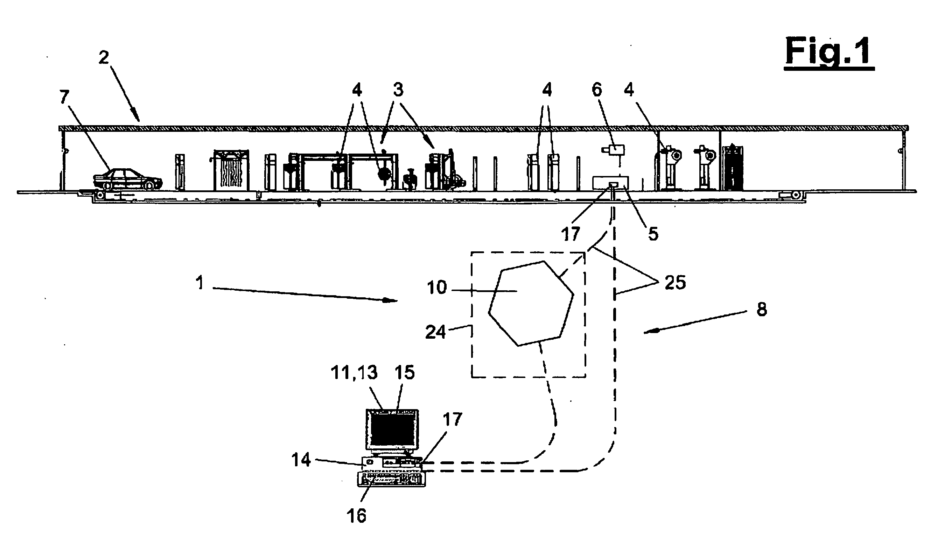

Im Ausführungsbeispiel von Figur 1 ist eine einzelne Fahrzeugbehandlungsanlage (2) mit einer externen Verwaltungseinheit (11) verbunden. In der Variante von Figur 2 sind mehrere Fahrzeugbehandlungsanlagen (2), die z.B. zu einer Anlagenkette gehören, mit ein oder mehreren Verwaltungseinheiten (11) verbunden. Alternativ können die verschiedenen Behandlungsanlagen (2) unterschiedlichen Betreibern gehören, wobei die Anlagenverwaltung einer gemeinsamen Verwaltungsstelle in Lohnarbeit übertragen wird.

Die Datenfernübertragung (8) kann beliebig ausgebildet sein. Sie kann auf beliebig geeigneten Wegen, insbesondere über ein internes und/oder ein externes Netzwerk (9,10), kommunizieren. In den Ausführungsbeispielen sind hierfür verschiedene Varianten dargestellt.

In Figur 1 sind zwei alternative Möglichkeiten aufgezeigt. Einerseits kann die Fahrzeugbehandlungsanlage (2) in üblicher Weise einer Tankstelle (24) zugeordnet sein, die z.B. über ein vorhandenes internes eigenes Computernetzwerk (10) nebst eines Datenfernanschlusses an ein externes Netzwerk (9) zur Datenübertragung, z.B. das Internet, verfügt. Der Datenfernanschluss kann ein Internetanschluss per DSL, ISDN oder dgl. sein. In einem solchen Fall kann sich die Fahrzeugbehandlungsanlage (2) der vorhandenen Übertragungstechnologie bedienen und wird mit ihrer Steuerung (5) nur auf kurzem Wege an das vorhandene Computernetzwerk (10) angeschlossen und erhält hierüber Zugriff auf das Internet (9), an das auch die Verwaltungseinheit (11) angeschlossen ist. Das Internet (9) bildet ein weiteres Netzwerk, wodurch für die Datenfernübertragung (8) in diesem Fall gekoppelte Netze (9,10) benutzt werden.

In der alternativ dargestellten Ausführung von Figur 1 ist die Steuerung (5) auf direktem Wege mit der Verwaltungseinheit (11) verbunden. Diese direkte Datenfernübertragung (8) kann z.B. über eine Standleitung oder drahtlos über eine Richtfunkstrecke oder dergleichen geschehen. In weiterer Abwandlung kann die Steuerung (5) einen eigenen Internetanschluss haben. Zudem ist es möglich, den Anschluss an das Internet oder ein anderes Netzwerk (9,10) drahtlos zu bewerkstelligen, z.B. über den Anschluss der Steuerung (5) an ein Mobilfunknetz, was zum Beispiel über eine UMTS-Steckkarte oder dergleichen geschehen kann.

Die Steuerung (5) verfügt über eine entsprechend geeignete Datenübertragungstechnologie und besitzt insbesondere eine geeignete Schnittstelle (17) für die Datenfernübertragung (8) und insbesondere für den Anschluss an das Netzwerk (10) bzw. an das Internet (9). Diese Schnittstelle kann durch eine Netzwerkkarte, ein Modem, eine Funk-Karte oder dergleichen, bewerkstelligt werden. Ferner ist die Steuerung (5) vorzugsweise auf Internet-Kommunikation mit einem geeigneten Protokoll, z.B. dem TCP/IP-Protokoll, ausgerichtet und besitzt hierfür eine geeignete Hard- und Software, insbesondere einen Web-Server mit einem Web-Browser. Steuerungsintern kann ebenfalls ein internettaugliches Netzwerk zum Datenaustausch mit den Anlagenkomponenten (3,4) vorhanden und z.B. entsprechend der WO 2001/067190 A1 ausgebildet sein. Auch die Anlagenkomponenten (3,4) können mit internettauglichen Schnittstellen, z.B. Fast Ethernet-Schnittstellen, und mit Web-Servern- und Web-Browsern ausgerüstet sein, so dass ein Datenzugriff von der Verwaltungseinheit (11) bis direkt zu den Anlagenkomponenten (3,4) möglich ist. Dies kann über das anlageninterne Netzwerk oder alternativ in direkter Kommunikation geschehen, wenn die Anlagenkomponenten (3,4) eigene Schnittstellen (17) haben oder über eine Sammel-Schnittstelle, z.B. einen Router, an das externe Netzwerk (9) angeschlossen sind.

Über die Browsertechnologie werden Zustandsinformationen, wie technische oder wirtschaftliche Betriebsmeldungen auf Webseiten mit entsprechenden internettauglichen Kommunikations-Standards bereit gestellt und können umgekehrt auf diesem Wege auch beeinflusst und verändert werden. Eine entsprechende Kommunikationsschiene kann auch mit der oder den Überwachungseinrichtungen (6) bestehen.

In Figur 2 ist eine Variante dargestellt, in der mehrere Fahrzeugbehandlungsanlagen (2) zu einem eigenen Netzwerk (10) zusammen geschlossen sind, an welches ein oder mehrere Verwaltungseinheiten (11) angebunden sind. Das Netzwerk kann sternförmig oder ringförmig sein. Bei der Ringform können bei Bedarf auch die Fahrzeugbehandlungsanlagen (2) untereinander kommunizieren.

Bei einem öffentlichen Netzwerk (9), z.B. dem Internet, kann die Kommunikationsverbindung zur Verwaltungseinheit (11) einseitig von der Anlagensteuerung (5) und/oder den Anlagenkomponenten (3,4) durch eine entsprechend konfigurierte Schnittstelle (17) aufgebaut werden, z.B. über eine Einwahl per DSL oder ISDN mit wechselnden IP-Adressen. Der Verbindungsaufbau erfolgt z.B. automatisch bei jedem Einschalten der Fahrzeugbehandlungsanlage (2). Die Datenverbindung kann während des Betriebs der Fahrzeugbehandlungsanlage (2) aufrecht erhalten bleiben und erst bei einem regulären Ausschalten der Fahrzeugbehandlungsanlage (2) getrennt werden. Alternativ können intermittierend bzw. periodisch Verbindungen einseitig aufgebaut und abgebaut werden.

Eine bidirektionale Datenkommunikation und ein Zugriff der Verwaltungseinheit (11) sind bei einer einseitigen Anlageneinwahl nur bei einer stehenden Verbindung möglich, wobei Datensicherheitsmechanismen, z.B. Datenverschlüsselungen, eine gesicherte VPN-Verbindung oder dgl. benutzt werden. Die Schnittstellen (17) in der Fahrzeugbehandlungsanlage (2) können dabei von außen nicht angewählt werden. Dies verhindert unbefugte Manipulationen Dritter.

Die Verwaltungseinheit (11) ist in beliebig geeigneter Form ausgebildet. Vorzugsweise besteht sie aus einem Computer (13), insbesondere einem Personalcomputer. Der Computer (13) weist eine Recheneinheit (14), eine Anzeige (15), z.B. einen Monitor, mindestens eine Eingabeeinheit (16), z.B. eine Tastatur, eine Maus oder dgl. und mindestens eine Schnittstelle (17) zum Anschluss an die Datenübertragung (8) auf. Diese kann je nach Art der gewählten Datenfernübertragung (8) ausgebildet sein. z.B. als DSL-Internetanschluss mit Web-Browser, als Anschluss an ein vorhandenes Computernetzwerk mit Internetzugang oder dgl.. Die Verwaltungseinheit (11) bildet eine Serverapplikation mit den Fahrzeugbehandlungsanlage(n) als Clients.

In der Recheneinheit (14) sind neben ein oder mehreren Mikroprozessoren mehrere Daten- und Programmspeicher enthalten. Hier können verschiedene Betriebs- und Anwendungsprogramme, insbesondere Verwaltungsprogramme abgelegt sein und ausgeführt werden. Dies umfasst u.a. ein Kommunikationsprogramm für den Datenaustausch über die Datenfernübertragung (8).

Die Verwaltungsprogramme können eine Monitoring- und/oder Steuerfunktion haben. Sie können z.B. Programme zum Erfassen, Austauschen und Darstellen von Zustandsinformationen und anderen Betriebsdaten der Fahrzeugbehandlungsanlage (2) sein und z.B. einen internet-tauglichen Web-Browser beinhalten. Ein Verwaltungsprogramm kann andererseits auch ein Bedien- und Steuerprogramm sein, um Parameter an der Steuerung (5) zu verstellen, in der Steuerung (5) hinterlegte Funktions- und insbesondere Waschprogramme, aufzurufen oder Änderungen von Parametern oder Programmen durchzuführen.

Ferner können die gesamte Fahrzeugbehandlungsanlage (2) oder einzelne Anlagenkomponenten (3,4) gezielt beeinflusst und insbesondere ein- und ausgeschaltet werden. Beispielsweise lässt sich bei einer Fahrzeugbehandlungsanlage (2) die Prozessgeschwindigkeit erhöhen, wobei die einzelnen Behandlungsprozesse und auch die Relativhöhe zwischen Fahrzeug und Anlagenkomponenten (3,4) beschleunigt werden, um den Anlagendurchsatz zu erhöhen. Umgekehrt kann auch eine Verlangsamung stattfinden. Mit einem Verwaltungsprogramm können außerdem wirtschaftlich relevante Anlagendaten extern und zentral erfasst werden. Dies sind z.B. Waschzahlen, Preise, Betriebsstunden, Betriebsmittelverbrauch, Wartungsintervalle oder dergleichen.

In technischer Hinsicht können Fernüberwachungen mit Fehlerdiagnosen, Softwareupdates, Fernwartungen mit Fehlerbehebungen und generell Fernsteuerungen zentral und von extern durchgeführt werden. Die Steuerung (5) kann einen Betriebs- und Fehlerspeicher sowie ein integriertes Fehlerdiagnosesystem aufweisen. Bei einem Austreten von Fehlern oder Störungen kann selbsttätig eine entsprechende Meldung an die verwaltungseinheit geschickt werden, die dadurch zeitnah auf die besondere Anlagensituation aufmerksam gemacht wird. Über das Verwaltungssystem (1) ist auch eine Abfrage des Fehlerspeichers möglich. Zur Behebung des Fehlers oder der Störung können zeitnah eventuell benötigte Ersatzteile geordert und für einen wartungstermin vor Ort bereit gestellt werden.

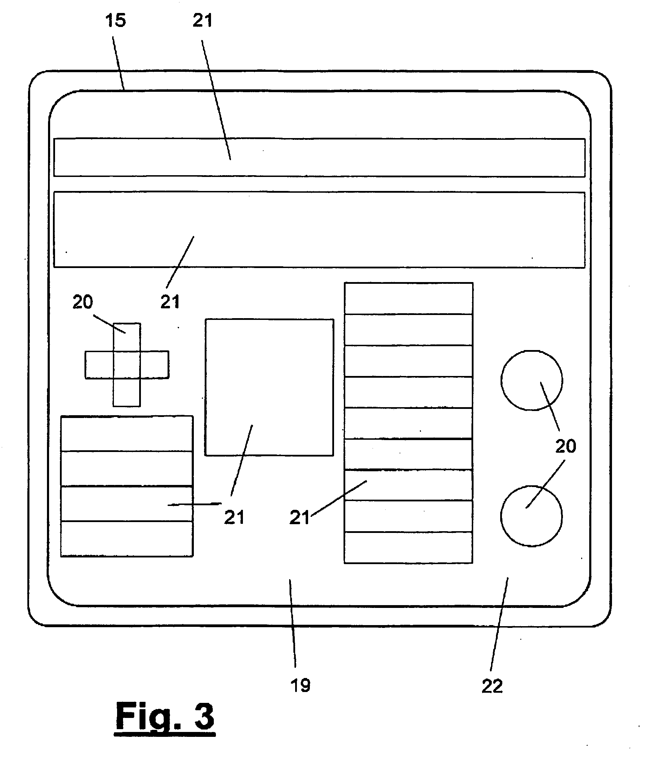

Die Verwaltungsprogramme beinhalten außerdem ein Programmteil zur Darstellung von ein oder mehreren Bildschirmmasken (18) auf der Anzeige (15). Figur 3 zeigt beispielhaft eine solche Bildschirmmaske (18), die z.B. einem Steuertableau (22) nachgebildet ist, wie es vor Ort an der Steuerung (5) in gleicher oder ähnlicher Weise vorhanden ist. Hierdurch kann eine Darstellung und Bedienung der Steuerung (5) wie vor Ort simuliert werden, wobei gleichartige Eingaben von Befehlen und Daten wie am Steuertableau (22) möglich sind. Die Bildschirmmaske (18) kann ein Bedienfeld (19) mit ein oder mehreren Bedienelementen (20) und Anzeigeelementen (21) aufweisen. Bedienelemente können z.B. die in der rechten Bildhälfte als Kreis dargestellten Buttons sein, die z.B. über einen Mausklick oder eine Cursorsteuerung mit Tastendruck aktiviert werden und einen entsprechenden Steuerbefehl per Datenfernübertragung (8) an die Steuerung (5) absetzen. Hierüber kann z.B. auch die Anlage (2) ein- und ausgeschaltet werden. Einträge in Eigabefeldern sind durch Tastendrücke möglich. Das gleiche ist bei entsprechender Kommunikationstiefe auch für die einzelnen Anlagenkomponenten (3,4) möglich.

Andere Bedienelemente (20) sind z.B. Auswahlfelder für Waschprogramme. In der linken Bildhälfte ist mit dem Kreuz eine Art mausbedienbarer Joystick dargestellt. Darunter können sich Auswahlfelder für einzelne Anlagengeräte (4) befinden, z.B. Waschbürsten, Trockendüsen oder dergleichen. Über den Joystick lassen sie sich ferngesteuert bewegen. Die Anzeigenelemente (21) zeigen Betriebsdaten in geeigneter Form an, z.B. als Schriftfelder, farbige oder blinkende Signalfelder, oder dergleichen. Die Bildschirmmaske (18) kann außerdem nach Standardvorgaben des Betriebssystems, z.B. Windows, strukturiert sein und die dort üblichen Bedien- und Anzeigeelemente bereit stellen.

In einer nicht dargestellten Variante kann eine Bildschirmmaske (18) als Steuerpanel ausgestaltet sein, mit dem gezielt Anlagen- oder Geräteparameter angezeigt, ausgewählt und eingestellt werden können. Auch hier kann die gleiche Erscheinungsform vor Ort an der Steuerung (5) gewählt werden. Ferner kann eine Bildschirmmaske als Registerkarte mit tabellarischem Aufbau für die Waschkunden ausgestaltet sein. Hier kann z.B. angezeigt werden, wie oft die verschiedenen an der Anlage (2) verfügbaren Programme im Automatik- oder manuellen Betrieb gelaufen sind. Die angezeigten Daten können über geeignete Programmschnittstellen konvertiert oder direkt ausgelesen und in Wirtschaftsprogrammen weiter verarbeitet werden. Eine andere Bildschirmmaske kann als Statusanzeige für die Anlagenkomponenten (3,4) ausgebildet sein und deren Betriebszustände anzeigen, wobei über verschiedene Erscheinungsformen, z.B. Farbgebung, Blinken oder dergleichen Warnhinweise oder ähnliches gegeben werden können. Über Popups können aktuelle Störungsmeldungen der Anlage (2) eingeblendet werden. Eine andere Bildschirmmaske kann als Registerseite für eine Kamera ausgestaltet sein und das von der Kamera (6) aufgenommene Bild zusammen mit Zusatzinformationen über zeit, Aufstellungsort, Blickwinkel, URL-Adresse der Kamera etc. anzeigen. Hierüber lässt sich ggf. die Kamera (6) auch in ihren Bewegungen fernsteuern. Weitere Bildschirmmasken können für die Konfiguration des gesamten Verwaltungssystems (1) und seiner Komponenten vorhanden sein.

Abwandlungen der gezeigten Ausführungsformen im Rahmen der Ansprüche sind in verschiedener weise möglich. Die in den verschiedenen Ausführungsbeispielen dargestellten Merkmale lassen sich untereinander kombinieren oder vertauschen. Auch die konstruktiven Ausbildungen und die Anordnungen der Komponenten des Verwaltungssystems (1) lassen sich abwandeln.

Die Datenfernübertragung (8) und die Kommunikation können anders ausgebildet sein und mit anderen Datenübertragungs-Protokollen funktionieren. Die Netzwerke (9,10) können in anderer Weise ausgebildet und angeordnet sein. Die Anzeige- und Bedientechnik kann anders ausgebildet sein, wobei auf die Simulation eines Steuertableaus (22) und dessen Bedienung verzichtet werden kann. Ein Verbindungsaufbau an der Datenfernübertragung (8) zwischen der Fahrzeughandlungsanlage (2) und der Verwaltungseinheit (11) kann beidseitig oder nur von der Verwaltungseinheit (11) her erfolgen.

### BEZUGSZEICHENLISTE

- 1: Verwaltungssystem
- 2: Fahrzeugbehandlungsanlage, Waschanlage
- 3: Anlagenkomponente, Bearbeitungsstation
- 4: Anlagenkomponente, Bearbeitungsgerät
- 5: Steuerung
- 6: Überwachungseinrichtung, Kamera
- 7: Fahrzeug
- 8: Datenfernübertragung
- 9: Netzwerk extern, Internet
- 10: Netzwerk intern
- 11: Verwaltungseinheit
- 12: Verwaltungszentrale
- 13: Computer
- 14: Recheneinheit
- 15: Anzeige, Monitor
- 16: Eingabeeinheit, Tastatur, Mouse
- 17: Schnittstelle
- 18: Bildschirmmaske
- 19: Bedienfeld
- 20: Bedienelement
- 21: Anzeigeelement
- 22: Steuertableau
- 23: Kundendienststelle
- 24: Tankstelle
- 25: Leitung

## Patentansprüche

1. Verwaltungssystem für Fahrzeugbehandlungsanlagen (2), insbesondere Waschanlagen, die mehrere Anlagenkomponenten (3,4) und eine Steuerung (5) aufweisen, wobei das Verwaltungssystem (1) mindestens eine externe Verwaltungseinheit (11) aufweist, die mit der Steuerung (5) und/oder den Anlagenkomponenten (3,4) durch eine Datenfernübertragung (8) mit Internet-Kommunikation und mit Schnittstellen (17) verbunden ist, wobei die Steuerung (5) und/oder die Anlagenkomponenten (3,4) und die Verwaltungseinheit (11) Web-Browser aufweisen und die Verwaltungseinheit (11) eine Anzeige (15) und ein Programm zur Darstellung von ein oder mehreren Bildschirmmasken (18) aufweist, wobei eine Bildschirmmaske (18) ein Bedienfeld (19) aufweist und einem Steuertableau (22) der Steuerung. (5) und/oder einer Anlagenkomponente (3,4) zur Simulierung einer Bedienung wie vor Ort nachgebildet ist.

2. Verwaltungssystem nach Anspruch 1, **dadurch gekennzeichnet, dass** die Kommunikation über das Internet (9) mit dem TCP/IP-Protokoll erfolgt .

3. verwaltungssystem nach Anspruch 1 oder 2, **dadurch gekennzeichnet, dass** die Steuerung (5) und/oder die Anlagenkomponenten (3,4) und die Verwaltungseinheit (11) Web-Server aufweisen.

4. Verwaltungssystem nach Anspruch 1, 2 oder 3, **dadurch gekennzeichnet, dass** die Fahrzeugbehandlungsanlage (2) ein internes internettaugliches Netzwerk (10) zum Datenaustausch mit den Anlagenkomponenten (3,4) aufweist.

5. Verwaltungssystem nach einem der vorhergehenden Ansprüche **dadurch gekennzeichnet, dass** die Fahrzeugbehandlungsanlage (2) mindestens eine mit der Steuerung (5) verbundene Überwachungseinrichtung (6), insbesondere eine Kamera, aufweist.

6. Verwaltungssystem nach einem der vorhergehenden Ansprüche **dadurch gekennzeichnet, dass** die Verwaltungseinheit (11) räumlich getrennt von der Fahrzeugbehandlungsanlage (2) angeordnet ist.

7. Verwaltungssystem nach einem der vorhergehenden Ansprüche **dadurch gekennzeichnet, dass** die Verwaltungseinheit (11) mit mehreren Fahrzeugbehandlungsanlagen (2) verbunden ist.

8. Verwaltungssystem nach einem der vorhergehenden Ansprüche **dadurch gekennzeichnet, dass** die Verwaltungseinheit (11) in der Verwaltungszentrale (12) eines Betreibers einer Anlagenkette angeordnet ist.

9. Verwaltungssystem nach einem der vorhergehenden Ansprüche **dadurch gekennzeichnet, dass** die Verwaltungseinheit (11) in einer Kundendienststelle (23) angeordnet ist.

10. Verwaltungssystem nach einem der vorhergehenden Ansprüche **dadurch gekennzeichnet, dass** die Verwaltungseinheit (11) und die Fahrzeugbehandlungsanlagen (2) in mindestens einem Netzwerk (9,10) verbunden sind.

11. Verwaltungssystem nach einem der vorhergehenden Ansprüche **dadurch gekennzeichnet, dass** die Datenfernübertragung (8) überörtlich ist.

12. Verwaltungssystem nach einem der vorhergehenden Ansprüche **dadurch gekennzeichnet, dass** die Datenfernübertragung (8) leitungsgebunden (25) oder drahtlos ist.

13. Verwaltungssystem nach einem der vorhergehenden Ansprüche **dadurch gekennzeichnet, dass** die Steuerung (5) an ein Netzwerk (10) in einer Tankstelle (24) mit Anschluss an das Internet (9) angebunden ist.

14. Verwaltungssystem nach einem der vorhergehenden Ansprüche **dadurch gekennzeichnet, dass** die Schnittstelle (17) für einen einseitigen Aufbau der Datenverbindungen von der Fahrzeugbehandlungsanlage (2) zur Verwaltungseinheit (11) ausgebildet ist, wobei eine bidirektionale Datenkommunikation und ein Zugriff der Verwaltungseinheit (11) nur bei einer stehenden Verbindung möglich sind.

15. Verwaltungssystem nach einem der vorhergehenden Ansprüche **dadurch gekennzeichnet, dass** die Verwaltungseinheit (11) für eine technische und/oder wirtschaftliche Verwaltung vorgesehen ist.

16. Verwaltungssystem nach einem der vorhergehenden Ansprüche **dadurch gekennzeichnet, dass** das Verwaltungssyst,em (1) zum Austausch von Zustandsinformationen und Steuerbefehlen vorgesehen ist.

17. Verwaltungssystem nach einem der vorhergehenden Ansprüche **dadurch gekennzeichnet, dass** die Verwaltungseinheit (11) als Computer (13) ausgebildet ist.

18. Verwaltungssystem nach einem der vorhergehenden Ansprüche **dadurch gekennzeichnet, dass** der Computer (13) einen Monitor und ein Programm zur Darstellung von ein oder mehreren Bildschirmmasken (18) aufweist.

19. Verwaltungssystem nach einem der vorhergehenden Ansprüche **dadurch gekennzeichnet, dass** das Bedienfeld (19) ein oder mehrere Bedienelemente (20) und Anzeigeelemente (21) aufweist.

20. Verfahren zum Verwalten, Überwachen und Steuern von Fahrzeugbehandlungsanlagen (2), insbesondere Waschanlagen, die mehrere Anlagenkomponenten (3,4) und eine Steuerung (5) aufweisen, wobei in einem Verwaltungssystem (1) eine externe Verwaltungseinheit (11) mit der steuerung (5) und/oder den Anlagenkomponenten (3,4) durch eine Datenfernübertragung (8) mit Internet-Kommunikation und mit Schnittstellen (17) sowie Web-Browsern kommuniziert, wobei die Verwaltungseinheit (11) eine Anzeige (15) und ein Programm zur Darstellung von ein oder mehreren Bildschirmmasken (18) aufweist, wobei in einer Bildschirmmasken (18) ein Steuertableau (22) der Steuerung (5) und/oder einer Anlagenkomponente (3,4) nachgebildet und dessen Bedienung wie vor Ort simuliert wird.

21. Verfahren nach Anspruch 20, **dadurch gekennzeichnet, dass** die Kommunikation über das Internet (9) mit dem TCP/IP-Protokoll erfolgt.

22. Verfahren nach Anspruch 20 oder 21, **dadurch gekennzeichnet, dass** die Steuerung (5) und/oder die Verwaltungseinheit (11) mit einer Anlagenkomponente (3,4) über ein internes internettaugliches Netzwerk (10) kommuniziert

23. Verwaltungssystem nach einem der Ansprüche 20 bis 22, **dadurch gekennzeichnet, dass** die Datenverbindungen von der Fahrzeugbehandlungsanlagen (2) zur Verwaltungseinheit (11) einseitig aufgebaut wird, wobei eine bidirektionale Datenkommunikation und ein Zugriff der Verwaltungseinheit (11) nur bei einer stehenden Verbindung möglich sind.

## Claims

1. Management system for vehicle treatment installations (2), in particular washing installations, which have a plurality of installation components (3, 4) and a controller (5), the management system (1) having at least one external management unit (11) which is connected to the controller (5) and/or to the installation components (3, 4) by means of remote data transmission (8) with Internet communication and to interfaces (17), the controller (5) and/or the installation components (3, 4) and the management unit (11) having web browsers, and the management unit (11) having a display (15) and a program for displaying one or more screen masks (18), a screen mask (18) having an operator panel (19) and being modelled on a control panel (22) of the controller (5) and/or of an installation component (3, 4) for simulating operation in situ.

2. Management system according to Claim 1, **characterized in that** communication is effected via the Internet (9) with the TCP/IP protocol.

3. Management system according to Claim 1 or 2, **characterized in that** the controller (5) and/or the installation components (3, 4) and the management unit (11) have web servers.

4. Management system according to Claim 1, 2 or 3, **characterized in that** the vehicle treatment installation (2) has an internal Internet-compatible network (10) for interchanging data with the installation components (3, 4).

5. Management system according to one of the preceding claims, **characterized in that** the vehicle treatment installation (2) has at least one monitoring device (6) which is connected to the controller (5), in particular a camera.

6. Management system according to one of the preceding claims, **characterized in that** the management unit (11) is arranged such that it is spatially separate from the vehicle treatment installation (2).

7. Management system according to one of the preceding claims, **characterized in that** the management unit (11) is connected to a plurality of vehicle treatment installations (2).

8. Management system according to one of the preceding claims, **characterized in that** the management unit (11) is arranged in the management centre (12) of an operator of a chain of installations.

9. Management system according to one of the preceding claims, **characterized in that** the management unit (11) is arranged in a customer service point (23).

10. Management system according to one of the preceding claims, **characterized in that** the management unit (11) and the vehicle treatment installations (2) are connected in at least one network (9, 10).

11. Management system according to one of the preceding claims, **characterized in that** the remote data transmission (8) is supralocal.

12. Management system according to one of the preceding claims, **characterized in that** the remote data transmission (8) is cable-based (25) or wireless.

13. Management system according to one of the preceding claims, **characterized in that** the controller (5) is connected to a network (10) in a petrol station (24) with a connection to the Internet (9).

14. Management system according to one of the preceding claims, **characterized in that** the interface (17) is designed to set up the data links from the vehicle treatment installation (2) to the management unit (11) in a one-sided manner, bidirectional data communication and access by the management unit (11) being possible only with a permanent link.

15. Management system according to one of the preceding claims, **characterized in that** the management unit (11) is provided for technical and/or economic management.

16. Management system according to one of the preceding claims, **characterized in that** the management system (1) is intended to interchange status information and control commands.

17. Management system according to one of the preceding claims, **characterized in that** the management unit (11) is in the form of a computer (13) .

18. Management system according to one of the preceding claims, **characterized in that** the computer (13) has a monitor and a program for displaying one or more screen masks (18).

19. Management system according to one of the preceding claims, **characterized in that** the operator panel (19) has one or more operating elements (20) and display elements (21).

20. Method for managing, monitoring and controlling vehicle treatment installations (2), in particular washing installations, which have a plurality of installation components (3, 4) and a controller (5), an external management unit (11) in a management system (1) communicating with the controller (5) and/or with the installation components (3, 4) by means of remote data transmission (8) with Internet communication and communicating with interfaces (17) as well as web browsers, the management unit (11) having a display (15) and a program for displaying one or more screen masks (18), a control panel (22) of the controller (5) and/or of an installation component (3, 4) being simulated in a screen mask (18) and its operation being simulated in situ.

21. Method according to Claim 20, **characterized in that** communication is effected via the Internet (9) with the TCP/IP protocol.

22. Method according to Claim 20 or 21, **characterized in that** the controller (5) and/or the management unit (11) communicate(s) with an installation component (3, 4) via an internal Internet-compatible network (10).

23. Management system according to one of Claims 20 to 22, **characterized in that** the data links from the vehicle treatment installations (2) to the management unit (11) are set up in a one-sided manner, bidirectional data communication and access by the management unit (11) being possible only with a permanent link.

## Revendications

1. Système de gestion pour installations de traitement de véhicules (2), notamment des installations de lavage, qui présentent plusieurs composants d'installation (3, 4) et une commande (5), le système de gestion (1) présentant au moins une unité de gestion externe (11) qui est reliée avec la commande (5) et/ou les composants d'installation (3, 4) par le biais d'une télétransmission de données (8) avec communication Internet et avec des interfaces (17), la commande (5) et/ou les composants d'installation (3, 4) ainsi que l'unité de gestion (11) présentant un navigateur Web et l'unité de gestion (11) présentant un afficheur (15) et un programme pour représenter un ou plusieurs masques d'écran (18), un masque d'écran (18) présentant une zone de commande (19) et un tableau de commande (22) de la commande (5) et/ou d'un composant d'installation (3, 4) étant reproduit pour simuler une commande comme si elle avait lieu sur site.

2. Système de gestion selon la revendication 1, **caractérisé en ce que** la communication s'effectue par le biais de l'Internet (9) avec le protocole TCP/IP.

3. Système de gestion selon la revendication 1 ou 2, **caractérisé en ce que** la commande (5) et/ou les composants d'installation (3, 4) ainsi que l'unité de gestion (11) présentent un serveur Web.

4. Système de gestion selon la revendication 1, 2 ou 3, **caractérisé en ce que** l'installation de traitement de véhicules (2) présente un réseau interne (10) compatible avec l'Internet pour l'échange de données avec les composants d'installation (3, 4).

5. Système de gestion selon l'une des revendications précédentes, **caractérisé en ce que** l'installation de traitement de véhicules (2) présente au moins un dispositif de surveillance (6), notamment une caméra, relié avec la commande (5).

6. Système de gestion selon l'une des revendications précédentes, **caractérisé en ce que** l'unité de gestion (11) est disposée séparément dans l'espace de l'installation de traitement de véhicules (2) .

7. Système de gestion selon l'une des revendications précédentes, **caractérisé en ce que** l'unité de gestion (11) est reliée avec plusieurs installations de traitement de véhicules (2).

8. Système de gestion selon l'une des revendications précédentes, **caractérisé en ce que** l'unité de gestion (11) est disposée dans la centrale de gestion (12) d'un exploitant d'une chaîne d'installations.

9. Système de gestion selon l'une des revendications précédentes, **caractérisé en ce que** l'unité de gestion (11) est disposée dans un centre de service clientèle (23).

10. Système de gestion selon l'une des revendications précédentes, **caractérisé en ce que** l'unité de gestion (11) et les installations de traitement de véhicules (2) sont reliées dans au moins un réseau (9, 10).

11. Système de gestion selon l'une des revendications précédentes, **caractérisé en ce que** la télétransmission de données (8) est au-delà de locale.

12. Système de gestion selon l'une des revendications précédentes, **caractérisé en ce que** la télétransmission de données (8) est filaire (25) ou sans fil.

13. Système de gestion selon l'une des revendications précédentes, **caractérisé en ce que** la commande (5) est reliée à un réseau (10) dans une station service (24) avec connexion à l'Internet (9).

14. Système de gestion selon l'une des revendications précédentes, **caractérisé en ce que** l'interface (17) est configurée pour un établissement d'un seul côté des liaisons de données de l'installation de traitement de véhicules (2) vers l'unité de gestion (11), une communication de données bidirectionnelle et un accès à l'unité de gestion (11) n'étant possibles que lorsqu'une liaison est établie.

15. Système de gestion selon l'une des revendications précédentes, **caractérisé en ce que** l'unité de gestion (11) est prévue pour une gestion technique et/ou économique.

16. Système de gestion selon l'une des revendications précédentes, **caractérisé en ce que** le système de gestion (1) est prévu pour l'échange d'informations d'état et d'instructions de commande.

17. Système de gestion selon l'une des revendications précédentes, **caractérisé en ce que** l'unité de gestion (11) est réalisée sous la forme d'un ordinateur (13).

18. Système de gestion selon l'une des revendications précédentes, **caractérisé en ce que** l'ordinateur (13) présente un moniteur et un programme pour représenter un ou plusieurs masques d'écran (18).

19. Système de gestion selon l'une des revendications précédentes, **caractérisé en ce que** la zone de commande (19) présente un ou plusieurs éléments de commande (20) et éléments d'affichage (21).

20. Procédé de gestion, de surveillance et de commande d'installations de traitement de véhicules (2), notamment des installations de lavage, qui présentent plusieurs composants d'installation (3, 4) et une commande (5), une unité de gestion externe (11) dans un système de gestion (1) communiquant avec la commande (5) et/ou les composants d'installation (3, 4) par le biais d'une télétransmission de données (8) avec communication Internet et avec des interfaces (17) ainsi que des navigateurs Web, l'unité de gestion (11) présentant un afficheur (15) et un programme pour représenter un ou plusieurs masques d'écran (18), un tableau de commande (22) de la commande (5) et/ou d'un composant d'installation (3, 4) étant reproduit dans un masque d'écran (18) et sa commande étant simulée comme si elle avait lieu sur site.

21. Procédé selon la revendication 20, **caractérisé en ce que** la communication s'effectue par le biais de l'Internet (9) avec le protocole TCP/IP.

22. Procédé selon la revendication 20 ou 21, **caractérisé en ce que** la commande (5) et/ou l'unité de gestion (11) communique(nt) avec un composant d'installation (3, 4) par le biais d'un réseau interne (10) compatible avec l'Internet.

23. Système de gestion selon l'une des revendications 20 à 22, **caractérisé en ce que** les liaisons de données des installations de traitement de véhicules (2) vers l'unité de gestion (11) sont établies d'un seul côté, une communication de données bidirectionnelle et un accès à l'unité de gestion (11) n'étant possibles que lorsqu'une liaison est établie.
